# EUROPEAN PATENT SPECIFICATION

(11) **EP 3 052 325 B1**
(45) Date of publication and mention of the grant of the patent: **20.09.2017**
(21) Application number: 14780625.1
(22) Date of filing: 29.09.2014
(51) Int. Cl.: B60C 25/05, B60C 25/138

(54) **TYRE-CHANGING MACHINE**
REIFENWECHSELMASCHINE
MACHINE DE CHANGEMENT DE PNEU

(30) Priority: 30.09.2013 IT MO20130274
(43) Date of publication of application: 10.08.2016
(73) Proprietor: SICAM S.r.l., 42015 Correggio (RE) (IT)
(72) Inventor: DRESSLER, Bjoern, I-42015 Correggio (RE) (IT); VESCOVINI, Marco, I-42015 Correggio (RE) (IT); GILOCCHI, Alessandro, I-42015 Correggio (RE) (IT)
(74) Representative: Luppi, Emanuele
(86) International application number: PCT/IB2014/064916
(87) International publication number: WO 2015/044919

(56) References cited:
- EP-A1- 0 015 102
- EP-A1- 1 710 099
- IT-B- 1 033 997

## Description

### Technical Field

The present invention relates to a tyre-changing machine.

### Background Art

The use is known of tyre-changing machines for the removal and fitting of a tyre from the relative rim to repair or replace the tyre itself.

A known type of machine comprises a base having a wheel gripping and rotation unit, a supporting post positioned upright from the base and a tool-carrying arm mounted on the post and suitable for moving vertically and horizontally.

The arm bears a tool for removing or fitting the tyre.

The removal tool is suitable for gripping the bead of the tyre to raise and remove it above an annular flange of the rim.

In use, after a preliminary tyre bead breaking phase, an operator positions and locks the wheel on the gripping and rotation means.

The tool is then moved towards the wheel, until it abuts and presses the side of the tyre, introducing one of its extremities, usually hooked, between the tyre bead and the rim.

Subsequently, the tool is moved so as to extract from the rim the portion of bead involved by the tool.

At this point, the rim is made to rotate by the above unit, to allow the entire bead to come out of the rim itself.

After which, the unit stops and the operator unloads the removed tyre and then loads another one to fit it on the rim.

After fitting, the wheel complete with the new tyre is in turn unloaded by the operator.

During the loading and unloading operations, the arm that carries the tool must be moved away from the work area in correspondence to the gripping and rotation unit, so as not to hinder the work of the operator.

For this purpose, some types of tyre-changing machines have a tip-up supporting post.

In practice, the post is suitable for tilting as it moves away from the gripping and rotation unit, i.e., behind the machine, considering the unit is positioned in the front part of the machine.

In detail, the post can oscillate between a work position wherein the post is vertical and the tool-carrying arm surmounts the unit, and can therefore intervene on the rim and tyre, and a disengagement position wherein it is tilted backwards to free the above work area.

The known oscillating or tip-up posts have a rear hinge, with horizontal axis, whereby they are connected to the aforementioned base.

More precisely, such hinge is positioned in correspondence to the side of the post opposite the one facing the gripping and rotation unit.

Furthermore, a linear actuator is positioned in front of the post with the cylinder hinged to the base and the rod hinged to the post itself.

The operation of the actuator determines the oscillation of the post.

In detail, when the post is in work position, the actuator is operated so as to retain the post vertically, pulling it towards the base.

In fact, in use, the post undergoes considerable stresses during the tyre removal and fitting operation, during which the tool carried by the arm connected to the post works in correspondence to the rim operated in rotation by the above unit. In practice, the forces at play propagate from the rim in rotation to the tool and from here to the arm, and then to the post.

The transfer of the stresses from the post to the base occurs in correspondence to the hinge, such stresses then passing from the base to the gripping and rotation unit which carries the rim, to define a sort of ample chain of forces.

The bending moments produced by the stresses in correspondence to the arm and the post, and in particular to the hinge, make it necessary to use a linear actuator with a high performance, which as is well known, is expensive.

Furthermore, strong bending moments are also produced in correspondence to the annular flange defining the bead seat in the rim and which is involved in the action of the fitting tool.

Such moments can result in damage being caused to the rim.

Special types of tyre-changing machines are disclosed by the patent documents EP 0 015 102, IT 1 033 997 and EP 1 710 099 whereby EP 0 015 102 shows the features of the preamble of claim 1.

### Description of the Invention

The main aim of the present invention is to provide a tyre-changing machine wherein, during use, the bending moments acting in correspondence to the post hinge and in correspondence to the rim are less than those of prior art.

Another object of the present invention is to provide a tyre-changing machine which can overcome the above mentioned drawbacks of the prior art in the ambit of a simple, rational, easy and effective to use as well as affordable solution.

The above mentioned objects are achieved by the present tyre-changing machine made according to claim 1.

### Brief Description of the Drawings

Other characteristics and advantages of the present invention will become better evident from the description of a preferred, but not exclusive, embodiment of a tyre-changing machine, illustrated by way of an indicative, but not limitative example in the accompanying drawings in which:
Figure 1 is a vertical sectional view of the tyre-changing machine according to the invention, in one of its operative configurations, in which are schematically shown the chains of the forces of the prior art and the invention;
Figure 2 is a view of the preceding illustration, in which the machine is shown in a different operative configuration; and

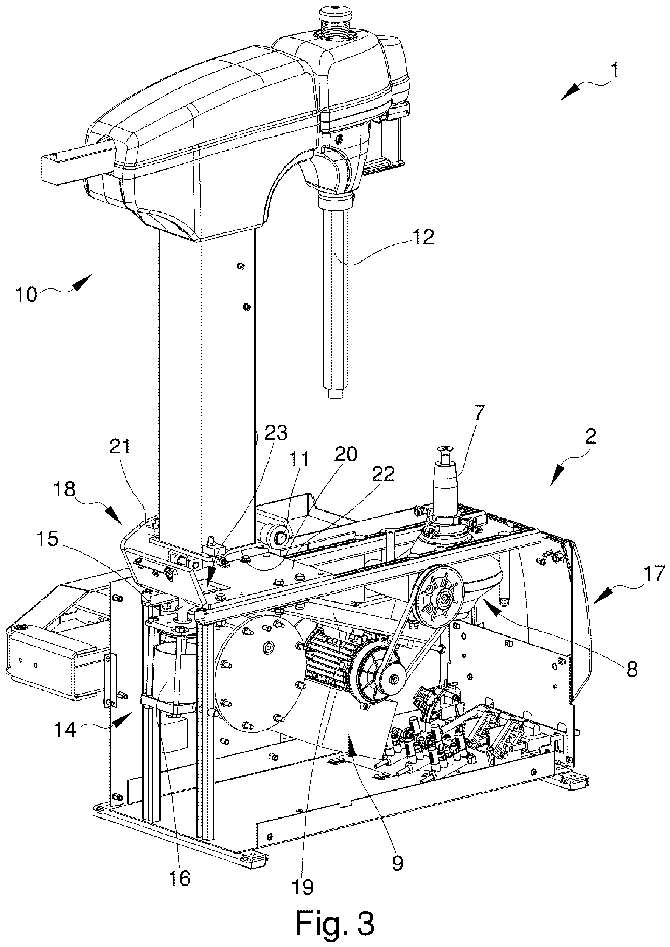

Figure 3 is an axonometric view of the machine according to the invention, the base structure of which is partially open.

### Embodiments of the Invention

With special reference to these figures, globally indicated by 1 is a tyre-changing machine of the invention.

The proposed machine 1 first of all comprises a base structure 2 which can rest on the ground and a gripping and rotation unit 3, suitable for gripping the rim 4 of a wheel 4, 5 and placing it in rotation, mounted on a front part of the structure 2 itself.

In detail, the gripping and rotation unit 3 comprises a chuck, in the form of a self-centring plate 6 which takes the wheel 4, 5, which plate 6 is placed in rotation by a central shaft 7 which protrudes from the top of the structure 2. The shaft 7 is rotated by a gear motor 8, positioned in an internal volume of the above structure 2.

A specific motor 9, it too included in such internal volume, operates the gear motor 8 and, consequently, the plate 6.

The machine 1 also comprises a supporting post 10, arranged at the rear of the gripping unit 3, which is connected to the structure 2 by means of a hinge 11 with horizontal rotation axis, arranged in correspondence to the bottom of post 10.

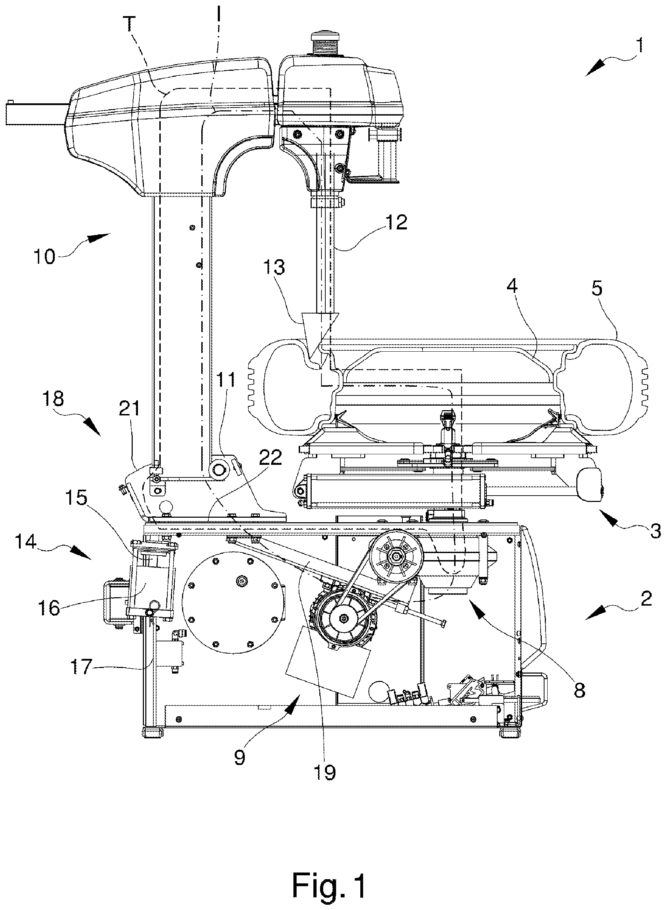

The invention then includes a tool-carrying arm 12 fitted on the post 10 and suitable for carrying a tool 13 (shown in stylized form in the figure 1) to fit/remove a tyre 5 onto/from the rim 4 of a wheel 4, 5 gripped by the aforementioned self-centring plate 6.

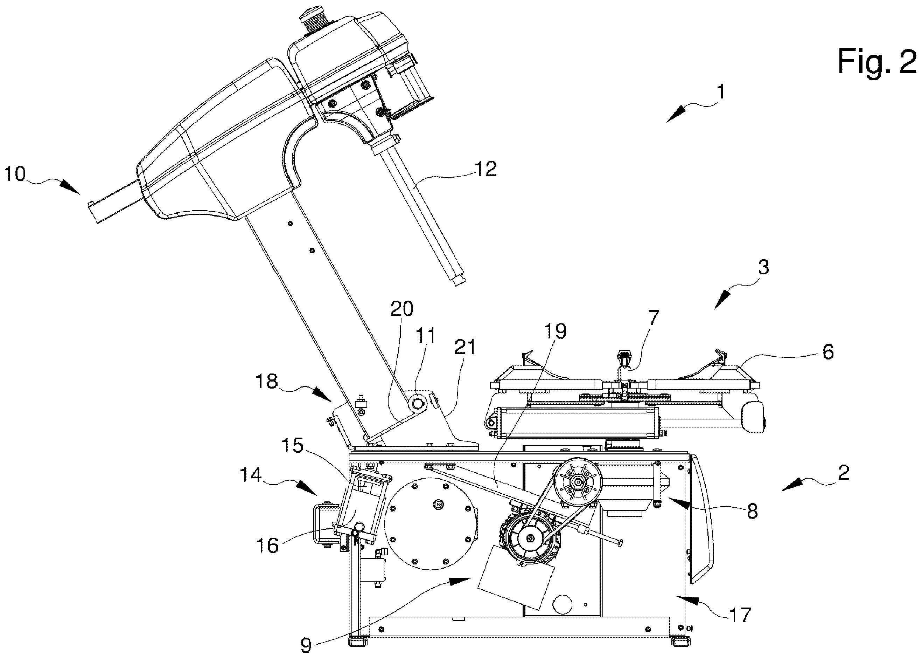

The post 10 is of the tip-up type and is rotatable with respect to the above hinge 11 so as to be able to oscillate between a work position (see figure 1), wherein it is closer to the gripping unit 3, and a disengagement position, wherein it is tilted to the rear and is farther from the unit 3 (see figure 2).

In practice, in the work position, the post 10 is arranged vertically, and the tool-carrying arm 12, which surmounts the unit 3, can be moved towards the wheel 4, 5 so the aforementioned tool 13 can engage with the wheel 4, 5, between the rim 4 and the tyre 5, so as to remove the latter.

In detail, the gripping unit 3 and the tool 13 cooperate in a known way to perform the fitting/removal operations of tyre 5.

When the operator has to load / unload a wheel 4, 5 or a rim 4, before or after a fitting or removal operation, the post 10 is tilted to the rear, and therefore towards the back of the machine, causing it to rotate around its hinge 11.

This way, the work area is freed in correspondence to the gripping unit 3. Clearly, when the tool 13 has to be used, the post 10 is returned to its vertical work position.

The oscillation between the two operating positions of post 10 is performed by actuation means 14 connected to the post 10, preferably comprising a hydraulic cylinder.

The cylinder 14 comprises a rod 15 the extremity of which is hinged to the post 10, while the barrel 16 is hinged to the aforementioned base structure 2. According to a very important aspect of the invention, the hinge 11 of the post 10 is positioned in correspondence to a front part of the post 10 itself, facing the aforementioned gripping unit 3.

The actuation means 14 intervene on the post 10 from the opposite side with respect to the hinge 11, and the rod 15 of the cylinder is hinged to the rear part of the post 10.

This solution permits bringing the point of rotation of post 10 closer to the tool 13 on which the stresses of rim 4 are discharged, and to the shaft 7 which causes the rotation of the rim 4 itself.

Consequently, the arm of the bending moment having as pole the hinge 11, is reduced compared to that of prior art, with the consequence that the bending moment module acting on the machine of the invention is lower than that undergone by prior art.

We shall come back to this aspect later on after illustrating further construction aspects of the invention.

In the preferred embodiment of the invention, the structure 2 comprises a bench 17 resting directly on the ground and a counter frame 18, 19, fixed to the bench 17 and supported by it.

The counter frame 18, 19 is mechanically connected to the post 10 by means of the hinge 11 and is also mechanically connected to the gripping unit 3.

In detail, the counter frame 18, 19 preferably comprises a rear part 18 supported directly by the bench 17, in correspondence to which is arranged the hinge 11, and a front part 19, preferably plate shaped, which connects stiffly the rear part 18 to the gripping unit 3.

More precisely, the front part 19 of the counter frame 18, 19 is arranged inside the bench 17 and, preferably, supports the motor 9 which operates the unit 3, connected to the gear motor 8 by means of pulleys and belts or similar drive means.

Still more in detail, the front part 19 of the counter frame 18, 19 is connected to the bottom of the gear motor 8.

In practice, the rear part 18 of the counter frame 18, 19 is arranged above the bench 17, in correspondence to its rear, while the front part 19 is tilted so as to connect the rear part 18 to the bottom of the gear motor 8.

Figure 1 shows the comparison between the paths T, I of the chains of the forces that stress the machine in prior art and in the invention.

The path T of the prior art starts from the shaft 7, passes through the tool 13, the arm 12, the rear part 18 of the supporting post 10, and then bends by almost ninety degrees and longitudinally crosses the base of the known machine to reach the gear motor 8, in correspondence to which it makes an inversion before reaching the shaft 7, closing the circuit.

In the invention instead, the chain of the forces runs along the front part 19 of the post 10, where the hinge 11 is arranged and then, by means of the passage in the rear part 18 of the counter frame 18, 19, discharges along its tilted front part 19 before returning up through the gear motor 8 as far as the shaft 7.

In practice, the invention defines a narrower chain of forces without any sudden bends to define a G-shaped path I, so the structure 2, and in particular the post 10, the rim 4 and the tool 13, undergo a lower-module bending moment.

This permits using actuation means 14 of smaller sizing and, at the same time, reducing the risk of damaging the rim 4.

Preferably, the rear part 18 of the counter frame 18, 19 is box-shaped, to define an inner volume in which the base 20, or bottom, of the post 10 moves freely while it shifts from the work position to the disengagement position and vice versa.

Such rear part 18 can be defined by a pair of side plates 21 facing one another, between which is arranged the hinge 11 and the base of the post 10.

The side plates 21 are joined below by a base plate 22 fastened to the bench 17. Preferably, the rear part 18 comprises, in correspondence to the base plate 22, a passage 23 crossed with sliding freedom by the rod 15 of the above actuator.

## Claims

1. Tyre-changing machine (1) comprising:
- a base structure (2) which can rest on the ground;
- a gripping and rotation unit (3), suitable for gripping the rim (4) of a wheel (4, 5) and placing it in rotation, mounted on a front part of said structure (2);
- a supporting post (10), arranged at the rear of said unit (3), connected to said structure (2) by means of a hinge (11), said post (10) being rotatable around said hinge (11) between a work position, wherein it is vertically disposed and closer to said unit (3), and a disengagement position wherein it is tilted towards the rear and is farther from said unit (3); and
- a tool-carrying arm (12) fitted on said post (10) suitable for carrying a tool (13) to fit / remove a tyre (5) onto / from said rim (4);
wherein said hinge (11) is arranged in correspondence to a front part of said post (10), facing said unit (3), **characterized by** the fact that it comprises actuation means (14) suitable for moving said post (10) between said work position and disengagement position, connected to said post (10) in correspondence to one rear part of said post (10) opposite said front part of the post (10).

2. Machine (1) according to claim 1, **characterized by** the fact that said actuation means comprise at least a hydraulic cylinder (14) comprising a rod (15) hinged to said rear part of the post (10) and a barrel (16) hinged to said base structure (2).

3. Machine (1) according to one or more of the preceding claims, **characterized by** the fact that said structure (2) comprises a bench (17) suitable for resting directly on the ground and a counter frame (18, 19), fixed to said bench (17), said counter frame (18, 19) being mechanically connected both to said post (10), by means of said hinge (11), and to said unit (3).

4. Machine (1) according to claim 3, **characterized by** the fact that said counter frame (18, 19) comprises a rear part (18), in correspondence to which is arranged said hinge (11), and a front part (19) which connects stiffly said rear part (18) to said unit (3).

5. Machine (1) according to claim 4, **characterized by** the fact that said front part (19) of the counter frame (18, 19) is arranged inside said bench (17).

6. Machine (1) according to claim 4 or 5, **characterized by** the fact that said front part (19) of the counter frame (18, 19) supports a motor (9) for the operation of said unit (3).

7. Machine (1) according to one or more of the claims from 4 to 6, **characterized by** the fact that said front part (19) of the counter frame (18, 19) is connected to the bottom of said unit (3).

8. Machine (1) according to one or more of the claims from 4 to 7, **characterized by** the fact that said rear part (18) of the counter frame (18, 19) is box shaped to define an inner volume in which the base of the post (10) moves freely, while it shifts from the work position to the disengagement position or vice versa.

9. Machine (1) according to claim 8, **characterized by** the fact that said rear part (18) of the counter frame (18, 19) comprises a passage crossed with sliding freedom by the rod (15) of a linear actuator, comprised in said actuation means (14) and hinged in correspondence to said rear part of the post (10).

## Patentansprüche

1. Reifenwechselmaschine (1), umfassend:
- eine Basisstruktur (2), die auf dem Boden ruhen kann,
- eine Greif- und Dreheinheit (3), die geeignet ist, die Felge (4) eines Rads (4, 5) zu ergreifen und sie in Drehung zu versetzen, und die an einem vorderen Teil der Struktur (2) befestigt ist,
- eine Stützsäule (10), die an der Rückseite der Einheit (3) angeordnet und mit Hilfe eines Scharniers (11) mit der Struktur (2) verbunden ist, wobei die Säule (10) um das Scharnier (11) zwischen einer Arbeitsstellung, in der sie vertikal angeordnet ist und sich näher bei der Einheit (3) befindet, und einer Nichteingriffsstellung, in der sie nach hinten geneigt ist und sich weiter weg von der Einheit (3) entfernt befindet, drehbar ist, und
- einen ein Werkzeug tragenden Arm (12), der an der Säule (10) angebracht und geeignet ist, ein Werkzeug (13) zum Anbringen eines Reifens (5) an der Felge (4) bzw. zum Abnehmen eines Reifens (5) von der Felge (4) zu tragen,
wobei das Scharnier (11) in Bezug auf einen vorderen Teil der Säule (10) der Einheit (3) zugewandt angeordnet ist, **gekennzeichnet durch** die Tatsache, dass es ein Betätigungsmittel (14) umfasst, das geeignet ist, die Säule (10) zwischen der Arbeitsstellung und der Nichteingriffsstellung zu bewegen, und in Bezug auf einen dem vorderen Teil der Säule (10) gegenüberliegenden rückwärtigen Teil der Säule (10) mit der Säule (10) verbunden ist.

2. Maschine (1) nach Anspruch 1, **gekennzeichnet durch** die Tatsache, dass das Betätigungsmittel wenigstens einen Hydraulikzylinder (14) umfasst, der eine Stange (15), die gelenkig an dem rückwärtigen Teil der Säule (10) angebracht ist, und eine Trommel (16), die gelenkig an der Basisstruktur (2) angebracht ist, umfasst.

3. Maschine (1) nach einem oder mehreren der vorhergehenden Ansprüche, **gekennzeichnet durch** die Tatsache, dass die Struktur (2) eine Bank (17), die geeignet ist, direkt auf dem Boden zu ruhen, und einen Gegenrahmen (18, 19), der an der Bank (17) befestigt ist, umfasst, wobei der Gegenrahmen (18, 19) sowohl mit der Säule (10) über das Scharnier (11) als auch mit der Einheit (3) mechanisch verbunden ist.

4. Maschine (1) nach Anspruch 3, **gekennzeichnet durch** die Tatsache, dass der Gegenrahmen (18, 19) einen rückwärtigen Teil (18), in Bezug auf den das Scharnier (11) angeordnet ist, und einen vorderen Teil (19), der den rückwärtigen Teil (18) starr mit der Einheit (3) verbindet, umfasst.

5. Maschine (1) nach Anspruch 4, **gekennzeichnet durch** die Tatsache, dass der vordere Teil (19) des Gegenrahmens (18, 19) in der Bank (17) angeordnet ist.

6. Maschine (1) nach Anspruch 4 oder 5, **gekennzeichnet durch** die Tatsache, dass der vordere Teil (19) des Gegenrahmens (18, 19) einen Motor (9) für den Betrieb der Einheit (3) abstützt.

7. Maschine (1) nach einem oder mehreren der Ansprüche 4 bis 6, **gekennzeichnet durch** die Tatsache, dass der vordere Teil (19) des Gegenrahmens (18, 19) mit dem Boden der Einheit (3) verbunden ist.

8. Maschine (1) nach einem oder mehreren der Ansprüche 4 bis 7, **gekennzeichnet durch** die Tatsache, dass der rückwärtige Teil (18) des Gegenrahmens (18, 19) kastenförmig ist, um einen inneren Rauminhalt festzulegen, in dem sich die Basis der Säule (10) frei bewegt, während sie aus der Arbeitsstellung in die Nichteingriffsstellung oder umgekehrt wechselt.

9. Maschine (1) nach Anspruch 8, **gekennzeichnet durch** die Tatsache, dass der rückwärtige Teil (18) des Gegenrahmens (18, 19) einen Durchgang umfasst, der von der Stange (15) eines Linearbetätigers mit Gleitfreiheit gekreuzt wird, die in dem Betätigungsmittel (14) enthalten und in Bezug auf den rückwärtigen Teil der Säule (10) gelenkig angebracht ist.

## Revendications

1. Machine de changement de pneu (1), comprenant:
- une structure de base (2) qui peut reposer sur le sol;
- une unité de saisie et de rotation (3), appropriée pour saisir la jante (4) d'une roue (4, 5) et pour la mettre en rotation, montée sur une partie avant de ladite structure (2);
- un montant de support (10), agencé à l'arrière de ladite unité (3), connecté à ladite structure (2) au moyen d'une charnière (11), ledit montant (10) étant rotatif autour de ladite charnière (11) entre une position de travail, dans laquelle il est disposé verticalement et est plus proche de ladite unité (3), et une position de désengagement, dans laquelle il est incliné vers l'arrière et est plus éloigné de ladite unité (3); et
- un bras porte-outil (12) adapté sur ledit montant (10) et approprié pour porter un outil (13) pour monter / enlever un pneu (5) sur / de ladite jante (4),
dans lequel ladite charnière (11) est agencée en correspondance avec une partie avant dudit montant (10), en face de ladite unité (3), **caractérisée par le fait qu'**elle comprend des moyens d'actionnement (14) appropriés pour déplacer ledit montant (10) entre ladite position de travail et ladite position de désengagement, connectés audit montant (10) en correspondance avec une partie arrière dudit montant (10) opposée à ladite partie avant du montant (10).

2. Machine (1) selon la revendication 1, **caractérisée par le fait que** lesdits moyens d'actionnement comprennent au moins un cylindre hydraulique (14) qui comprend une tige (15) articulée sur ladite partie arrière du montant (10) et un cylindre (16) articulé sur ladite structure de base (2).

3. Machine (1) selon une ou plusieurs des revendications précédentes, **caractérisée par le fait que** ladite structure (2) comprend un banc (17) approprié pour reposer directement sur le sol et un contre-cadre (18, 19), fixé audit banc (17), ledit contre-cadre (18, 19) étant connecté de façon mécanique à la fois audit montant (10), au moyen de ladite charnière (11), et à ladite unité (3).

4. Machine (1) selon la revendication 3, **caractérisée par le fait que** ledit contre-cadre (18, 19) comprend une partie arrière (18), en correspondance avec laquelle ladite charnière (11) est agencée, et une partie avant (19) qui connecte de façon rigide ladite partie arrière (18) à ladite unité (3).

5. Machine (1) selon la revendication 4, **caractérisée par le fait que** ladite partie avant (19) du contre-cadre (18, 19) est agencée à l'intérieur dudit banc (17).

6. Machine (1) selon la revendication 4 ou 5, **caractérisée par le fait que** ladite partie avant (19) du contre-cadre (18, 19) supporte un moteur (9) servant à actionner ladite unité (3).

7. Machine (1) selon une ou plusieurs des revendications 4 à 6, **caractérisée par le fait que** ladite partie avant (19) du contre-cadre (18, 19) est connectée à la base de ladite unité (3).

8. Machine (1) selon une ou plusieurs des revendications 4 à 7, **caractérisée par le fait que** ladite partie arrière (18) du contre-cadre (18, 19) est en forme de boîte de manière à définir un volume intérieur dans lequel la base du montant (10) se déplace librement, pendant qu'il se déplace depuis la position de travail jusqu'à la position de désengagement, ou vice versa.

9. Machine (1) selon la revendication 8, **caractérisée par le fait que** ladite partie arrière (18) du contre-cadre (18, 19) comprend un passage croisé avec une liberté de coulissement par la tige (15) d'un actionneur linéaire, compris dans lesdits moyens d'actionnement (14) et articulé en correspondance avec ladite partie arrière du montant (10).
